# EUROPEAN PATENT APPLICATION

(11) **EP 2 502 847 A1**
(43) Date of publication of application: **26.09.2012**
(21) Application number: 12172288.8
(22) Date of filing: 04.02.2008
(51) Int. Cl.: B65D 71/38

(54) **Packaging system**

(30) Priority: 02.02.2007 GB 0702396
(62) Divisional of application: 08728930.2
(71) Applicant: MeadWestvaco Packaging Systems, LLC, Richmond, VA 23219-0501 (US)
(72) Inventor: Le Bras, Phillippe, F-36000 Chateauroux (FR)
(74) Representative: Rule, John Eric

(57) **Abstract**

A packaging system (4) comprising a plurality of first cartons (1) each forming a first package comprising a group of articles (A) and a second carton (2) for packaging a group of said first packages (1) whereby forming a secondary package. The second carton comprises (2) a plurality of removable portions (132a, 132b, 132c, 132d) each forming a part of a respective one of the first packages (1). Each of the first cartons (1) being disposed around a respective group of articles (A) and secured to a respective one of the removable portions (132a, 132b, 132c, 132d) of the second carton (2) through at least one engaging aperture (146a) defined in the second carton (2) and wherein a respective removable portion of the second carton (2) is coupled to the remainder of the second carton (2) by a frangible connection (170) such that each of the first packages (1) is removable from the secondary package (2)by breaking the frangible connection (170).

## Description

### Field of Invention

The present invention relates to a packaging system for multiple packaging of articles and more particularly, but not exclusively, to a packaging system in which a secondary package contains at least one, say a plurality of primary packages.

### Background of Invention

It is known to provide cartons for packaging multiple articles. EP 0,428,397 to Saulas and EP 0,694,011 to Blin et al disclose cartons comprising multiple compartments connected together by a common top panel. Such cartons are expensive; requiring substantial quantities of material and their complex structure leads to an increased complexity in their method of construction.

It is desirable to provide a packaging system in which articles are packaged in a primary package which may be printed with branding or advertising material to promote the goods being packaged. Furthermore, it is also desirable to provide a secondary package for transportation, protection and/or storage of the primary packages.

Of course, because of its ancillary purpose, it is desirable to minimise the costs and complexity associated with a secondary package, without reducing the aesthetic appeal of the primary package or its structural integrity.

The present invention seek to overcome, or at least mitigate, the problems in the prior art. Furthermore, the present invention seeks to provide an additional advantage by reducing the waste associated with the production of the secondary packaging.

### Summary of Invention

Accordingly, a first aspect of the invention provides a packaging system comprising a plurality of first carton blanks each for forming a first package about a group of articles and a second carton blank, having removable portions, for forming a second carton for packaging a group of the first packages, wherein each of the first carton blanks, in combination with a respective one of the removable portions of said second carton blank form a first carton about a respective one of said groups of articles, wherein each of the removable portions has inside and outside opposed surfaces, the inside surface being in contact at least in part with a respective one of the groups of articles, wherein the second carton blank comprises at least one engaging aperture, wherein at least one part of the each of the first carton blanks is inserted through the at least one engaging aperture and is secured to the outside surface of the respective one of the removable portions, and wherein the removable portions of said second carton blank are detachable therefrom such that each of said first cartons are individually separable from the second carton.

Preferably, the each of the first carton blanks comprises a first panel, a second panel, a third panel and a pair of securing panels, wherein said first panel is hinged at opposing side edges thereof to said second and third panels respectively, and wherein each of the second and third panels is hinged to a respective one of the securing panels, said securing panels of the each of the first carton blanks together providing the at least one part of the each of the first carton blanks and being secured to the outside surface of the respective one of the removable portions of the second carton blank.

Optionally, the each of the first carton blanks together with the respective one of the removable portions forms a tubular structure about the respective one of the groups of articles.

Preferably, the second carton comprises side walls wherein said side walls at least partially close at least one end of each of the tubular structures.

Optionally, the second carton blank comprises a main panel, the main panel including the removable portions and the at least one engaging aperture.

Preferably, the second carton comprises tabs for being received by tab receiving recesses of another like second carton such that the packaging system may be stacked with another like packaging system whereby said packaging system and said another package system interlock with one another.

Preferably, said tab receiving recesses are formed by apertures struck from the second carton.

Preferably, the at least one engaging aperture also forms the tab receiving recesses.

Accordingly, a second aspect of the invention provides a packaging apparatus comprising a plurality of primary cartons each for packaging one or more articles therein and a secondary carton having removable portions, wherein said primary cartons are retained within said secondary carton wherein at least a portion of each of said primary cartons is provided by a respective one of the removable portions of said secondary carton, wherein each of the removable portions has inside and outside opposed surfaces, the inside surface being disposed to be in contact at least in part with one or more articles, wherein the secondary carton comprises at least one engaging aperture, wherein at least one part of the each of the primary cartons is inserted through the at least one engaging aperture and is secured to the outside surface of the respective one of the removable portions.

Preferably, said removable portions are defined in part by said at least one engaging aperture and are coupled to the remainder of the main panel of the second carton blank by frangible connections such that each of the first cartons is removable from the second carton by breaking at least one of the frangible connections.

Preferably, each of said removable portions couples between the second and third panels of a respective one of the first carton blanks and forms a fourth panel of a respective one of the first carton in combination with said securing panels of the respective one of the carton blanks.

Accordingly, a third aspect of the invention provides a packaging system comprising a first carton each for forming a first package comprising a group of articles and a second carton for packaging a group of said first packages whereby forming a secondary package wherein a portion of the second carton forms a part of the first package, said first carton being secured around the group of articles to the second carton and wherein said portion of the second carton is coupled to the remainder of the second carton by a frangible connection such that the first package is removable from the secondary package by breaking the frangible connection.

Preferably, the first carton comprises a first panel hinged on opposed sides to a second and third panel respectively wherein each of the second and third panels is hinged to a securing panel said securing panels being secured to a removable portion of the secondary carton. Preferably, the first carton together with said portion of the second carton forms a tubular structure about the group of articles.

Preferably, the second carton comprises side and/or end walls wherein said side or end walls close at least one end of the tubular structure.

Preferably, the second carton comprises apertures for receiving portions of the first carton such that the first carton may be secured to the second carton.

Preferably, the second carton comprises tabs for being received by tab receiving recesses such that the packaging system may be stacked with another like packaging system whereby said packaging system and said another package system interlock with one another.

Preferably, the tab receiving recesses are formed by apertures struck from the second carton.

Preferably, the apertures for receiving portions of the first carton also form the apertures for forming the tab receiving recesses.

Accordingly, a fourth aspect of the invention provides a carton for packaging a group of articles having a first panel hinged on opposed sides therefore to a second and third panel respectively said second and third panels each being hinged to a securing panel respectively wherein in use the carton forms a package when secured about a group of articles to the secondary carton.

Accordingly, a fifth aspect of the invention provides a secondary carton for packaging a primary carton said secondary carton comprising apertures for receiving a portion of the primary carton, a detachable portion for being secured to securing panels of the primary package and frangible connections between said detachable portion and the remainder of the secondary carton.

Accordingly, a sixth aspect of the invention provides a method of assembly a packaging comprising providing a first blank for forming a primary carton and a second blank for forming a second carton, loading one of said first and second cartons with a group of articles, and securing the first carton to the second carton wherein a portion of the second carton together with the first carton and the group of articles form a package which is removable from the packaging system by breaking a frangible connection between said portion of the second carton and the remainder of the second carton.

Preferably, the first blank is conveyed over the article group and folded about the sides of the article group.

Preferably, the first blank and the article group are positioned over a second blank, portions of the first carton are received in apertures formed in the second blank and are secured to the second blank and the side and end walls of the second are folded about the article group and first carton.

Preferably, a first and second blank are secured to one another to form a tubular structure for receiving said group of articles wherein said tubular structure is loaded with an article group prior to assembly of the second blank into the second carton.

Accordingly, a seventh aspect of the invention provides a packaging apparatus comprising one or more primary cartons for packaging one or more articles therein and a secondary carton for retaining one or more of said primary cartons, wherein at least one of said primary cartons are retained within said secondary carton and wherein at least a portion of said primary carton is common to at least a part of said secondary carton.

### Brief Description of the Drawings

Exemplary embodiments of the present invention will now be described, by way of example, with reference to the accompanying drawings in which:
FIGURE 1 is a plan view of a blank for forming a carton according to a preferred embodiment of the present invention;
FIGURE 2 is a plan view of a blank of a secondary package according to a preferred embodiment of the present invention;
FIGURE 3 is a perspective view of a carton formed according to a preferred embodiment of the present invention;
FIGURE 4 is a perspective view of the base of a secondary package into which the cartons of Figure 3 have been loaded;
FIGURE 5 is a perspective view of the top of the secondary package of Figure 4 shown loaded with cartons of the type shown in Figure 3; and
FIGURE 6 shows a perspective view of the base of a secondary package according to an alternative embodiment of the present invention.

### Detailed Description of Exemplary Embodiments of the Present Invention

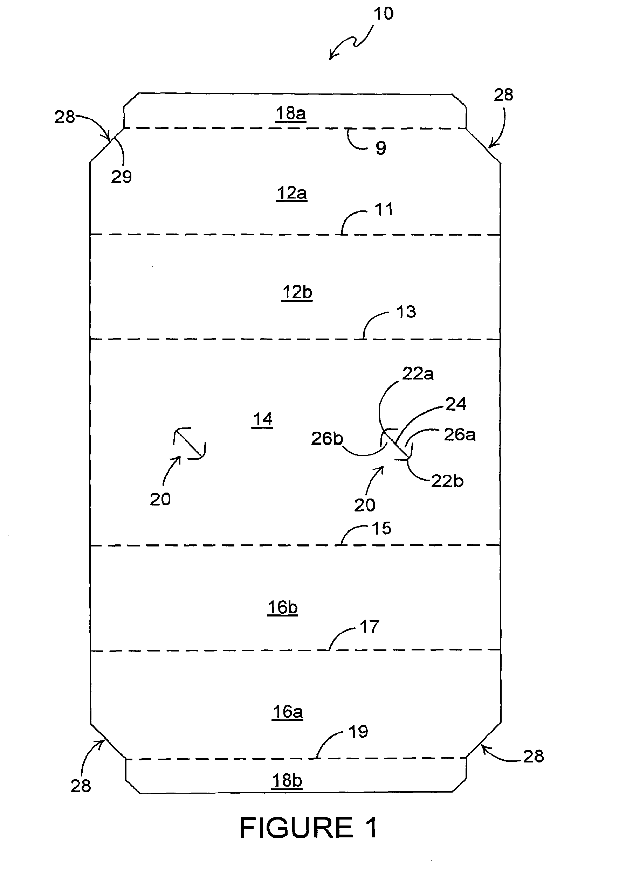

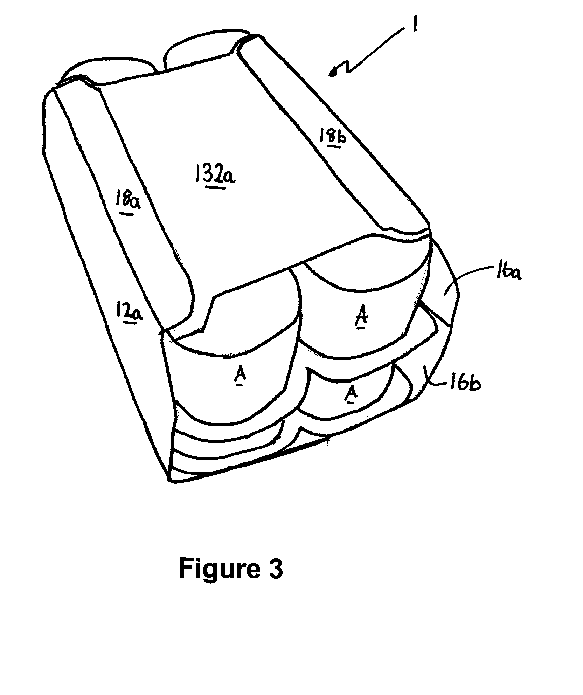

Referring to Figure 1 there is shown a blank 10 for forming in part a carton 1 as shown in Figure 3.

The blank 10 comprises a series of panels 12a, 12b, 14, 16a, 16b hinged one to the next for forming a top panel 14, and opposed side panels 12a/12b, 16a/16b.

Each of the opposed side panels 12a/12b, 16a/16b comprise upper side panels 12b, 16b and lower side panels 12a, 16a.

The upper side panel 12b is hinged to the lower side panel 12a by a fold line 11 and the upper side panel 16b is hinged to the lower side panel 16a by a fold line.

The upper side panels 12b, 16b, are hinged to opposing edges of the top panel 14 by fold lines 13 and 15 respectively.

Securing flaps 18a, 18b are hingedly connected to the distal edge of each lower side panel 12a/16a; flaps 18a, 18b are able to receive adhesive in use. The securing flaps 18a and 18b are shorter in length than the series of panels 12a, 12b 14, 16a, 16b and are disposed centrally along the length of lower side panels 12a and 16a respectively.

Lower side panels 12a and 16a each comprise chamfered corners 28 at a lower free edge 29 of the lower side panel 12a, 16a.

Top panel 14 comprises a pair of finger engagement tabs 20 formed by curved cut lines 22a and 22b disposed at opposite ends of a cut line 24, such that curved cut lines 22a, 22b and cut line 24 define in part a pair of tabs 26a, 26b. Each tab 26a, 26b of the pair of tabs 26a, 26b is adapted to be folded about notional lines disposed between the extremities of curved cut lines 22a, 22b.

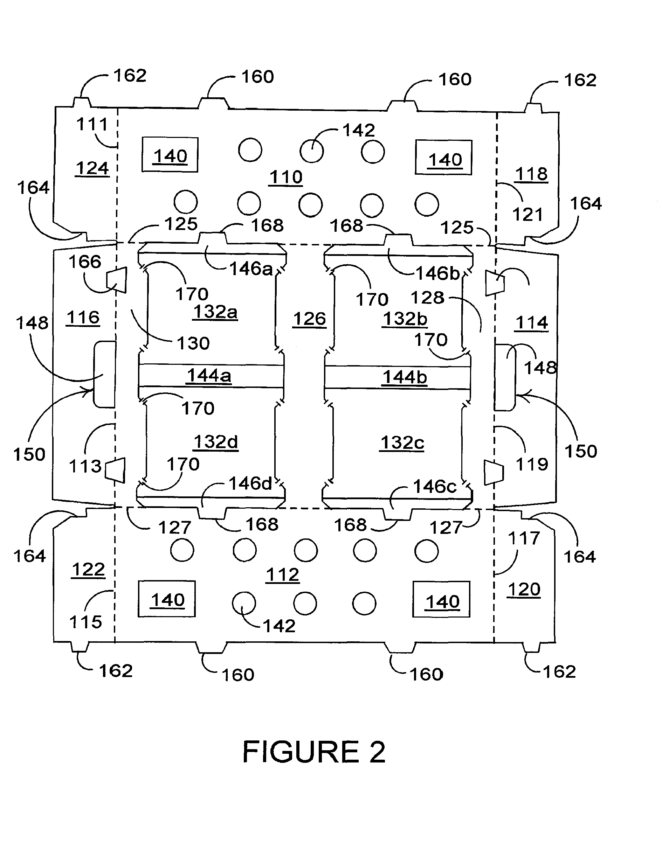

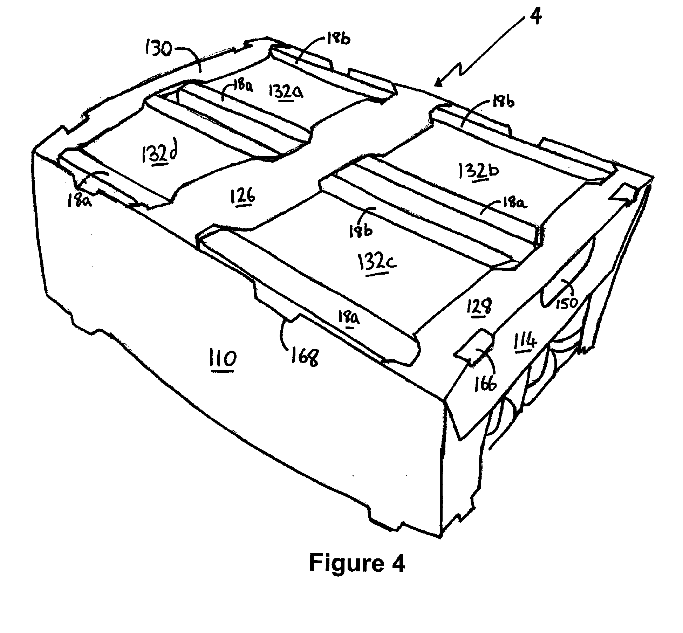

Turning now to Figure 2 there is shown a plan view of a blank 100 for forming a secondary package 2 of the type shown in Figure 4.

Blank 100 comprises a pair of opposed side wall panels 110,112 hinged by fold lines 125 and 127 respectively to a base structure for forming opposed side walls 110,112.

Optionally, side walls 110, 112 each comprise a plurality of first and second apertures 142 and 140. First apertures 142 are circular whereas second apertures 140 are rectangular. First and second apertures 142 and 140 are provided to allow ventilation of the package, and/or to provide windows for viewing parts of cartons 8, for example display or advertising panels, when cartons 8 are disposed within the secondary package 2. First and second apertures 142, 140 also serve to reduce the weight of the secondary package 2. First and second apertures 142, 140 may also be engaged by a packaging machine during assembly of the secondary package 2.

Side end closure flaps 118/124 and 120/122 are coupled to side walls 110, 112 respectively along respective fold lines 121/111 and 117/115.

Base end closure flaps 114, 116 are coupled to the base structure along fold lines 119 and 113 respectively.

An elongate aperture 148 is struck from each base end closure flap 114, 116. The elongate aperture 148 is disposed centrally within each base end closure flap 114, 116. A lower portion of each elongate aperture 148 is coincident with and interrupts fold lines 119 and 113. Elongate apertures 148 form a handle structure 150.

The base structure comprises four detachable base panels 132a, 132b 132c and 132d disposed between a pair of support members 126, 128/130. Detachable base panels 132a, 132d are disposed between support members 130, 126 where support member 130 is disposed at one end of the base structure in hinged connection with end closure flap 116 and along fold line 113 and support member 126 is disposed centrally within base structure and in hinged connection with side walls 110, 112 along portions of fold lines 125 and 127 respectively.

Detachable base panels 132b, 132c are disposed between central support member 126 and support member 128. Support member 128 is disposed at an opposed end of the base structure and is in hinged connection with base end closure flap 174 along fold line 119.

Engaging aperture 144a separates detachable base panels 132a and 132d and engaging aperture 144b separates detachable base panels 132c and 132b.

Engaging apertures 144a is disposed between end support member 130 and central support member 126, whereas engaging aperture 144b is disposed between end support member 128 and central support member 126.

Detachable base panels 132a, 132b, 132c 132d are maintained in connection with support members 126, 128, 130 via nick portions 170, or other frangible connection means, disposed substantially at each corner of the detachable base panels 132a, 132b, 132c,132d. Engaging aperture 146a, 146b, 146c, 146d separate detachable base panels 132a, 132b, 132c, 132d from their respective adjacent side wall 110, 112.

In the preferred embodiment, engaging apertures 146a, 146b, 146c, 146d are struck from the respective adjacent side wall 110, 112 and form one part of a complementary interlocking mechanism for interlocking multiple secondary packages 2 when stacked one upon another. Engaging apertures each 146a, 146b, 146c, 146d, form an engaging edge 168 which engages with an edge of a second part of the complementary interlocking mechanism.

The second part of the complementary interlocking mechanism is formed by tabs 160 which are disposed on upper edges of the side walls 110, 112. When multiple secondary packages 2 are stacked one upon another the tab 160 from a lower secondary package 2 engages with the portion of engaging aperture 146a, 146b, 146c, 146d struck from the respective adjacent side wall 110, 112 of an upper secondary package 2, thereby preventing longitudinal movement of the upper secondary package 2 relative to the lower secondary package 2.

Transverse interlocking supports are provided in part by tabs 162 disposed on upper edges of side end closure flaps 118, 120, 122, 124 and in part by apertures 166 struck from lower end closure laps 114, 116 and base structure and in part rebate portions 164 when secondary packages 2 are stacked on side end closure flaps 118, 120, 122, 124. Tabs 162 engage with the recess 166 formed in base end closure flaps 114, 116.

The rebate portions 164 of side end closure flaps 118, 120, 122 124 are in registry with aperture 166 in the assembled secondary package 2 such that the side end closure flaps 118, 120, 122, 124 do not interfere with the transverse interlocking mechanism formed by apertures 166 and tabs 162.

Turning now to Figure 3 there is shown a perspective view of the base of a carton 1 which forms a primary package for a group of articles A. It can be seen that the blank 10 of Figure 1 has been wrapped around the top and sides of a group of articles A.

One of the detachable base panels 132a from blank 100 has been secured to the securing flaps 18a, 18b by means of adhesive or other mechanical fixing means known in the art. Figure 4 shows a perspective view of the base of the secondary package 2, it can be seen that four blanks 10 have been assembled around four distinct groups of articles A. The blanks 10 have been secured to a respective one of the detachable base panels 132a, 132b, 132c, 132d.

The packaging system 4 shown in Figure 4 is assembled by forming groups of articles A and bringing them over a respective one of the detachable base panels 132a, 132b 132c, 132d and bringing a blank 10 over each group of articles A prior to or simultaneously with the step of bringing the group of articles A over the blank 100. The side panels 110, 112 of the blank 10 are folded about each group of articles A prior to placing groups of articles A upon the blank 100.

Securing flaps 18a, 18b of each of the blanks 10 are received in engaging apertures 146a, 146b, 146c, 146d and 144a, 144b respectively.

Securing flaps 18a, 18b are then secured to the detachable base panels 132a, 132b, 132c, 132d. At the same time as, or subsequently to, folding and securing the securing flaps 18a, 18b to the blank 100 the side walls 110, 112 are folded about all of the groups of articles A thereby formed.

The side end closure flaps 118, 120, 122 and 124 are then folded about their respective fold lines 121, 117, 115, 111 to be perpendicular with a respective sidewall 110, 112.

The base end closure flaps 114 116 are then folded about fold lines 119, 113 respectively to be disposed in face contacting relationship with respective side end closure flaps 118, 120, 122, 124. The base end closure flaps 114, 116 are secured to the side end closure flaps 118, 120, 122, 124 by means of adhesive or other mechanical locking means known in the art.

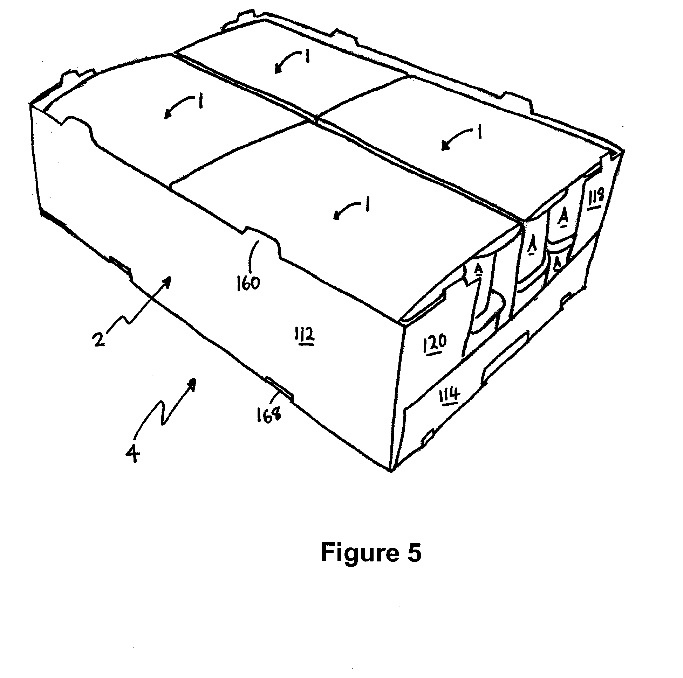

The assembly process forms a packaging system 4 having, in the preferred embodiment, a plurality of independently packaged groups of articles A, each independently packaged group of articles A shares a respective portion 132a, 132b, 132c, 132d of the base panel of the secondary package 2 (best illustrated in Figure 5), this respective portion 132a, 132b, 132c, 132d of the base panel of the secondary package 2 forms a detachable base panel 132a, 132b, 132c, 132d of carton 1 as is best illustrated in Figures 3. When a group of articles A is removed from the secondary package 2 the respective portion 132a, 132b, 132c, 132d of the base panel of the secondary package 2 is separated from the remainder of secondary package 2 as illustrated in Figure 3. This is achieved by breaking the frangible connection 170 between one of the respective portion 132a, 132b, 132c, 132d and the respective support members 126, 128/130.

Each separate independently packaged group of articles A comprises a carton 1 and twelve articles A arranged in a double tier stack of a two by three array of articles A.

In the assembled packaging system 4, the chamfered corners 28 provide an edge 29 which prevent the primary package or carton 1 falling from the secondary package 2 should the frangible connections 170 coupling a detachable base panel 132a, 132b, 132c, 132d break undesirably during transit.

The chamfered corners 28 also allow the blank 10 to be easily manipulated during assembly such that securing panels 18a, 18b can protrude sufficiently through engaging apertures 146a, 146b, 146c, 146d, whilst being secured to the respective detachable base panel 132a, 132b, 132c, 132d.

It will be understood by those skilled in the art that the chamfered corners 28 are optional and that square corners may be provided which would alternatively prevent the primary package falling from the secondary package 2.

It will be apparent to those skilled in the art that apertures 140 and 142 are entirely optional.

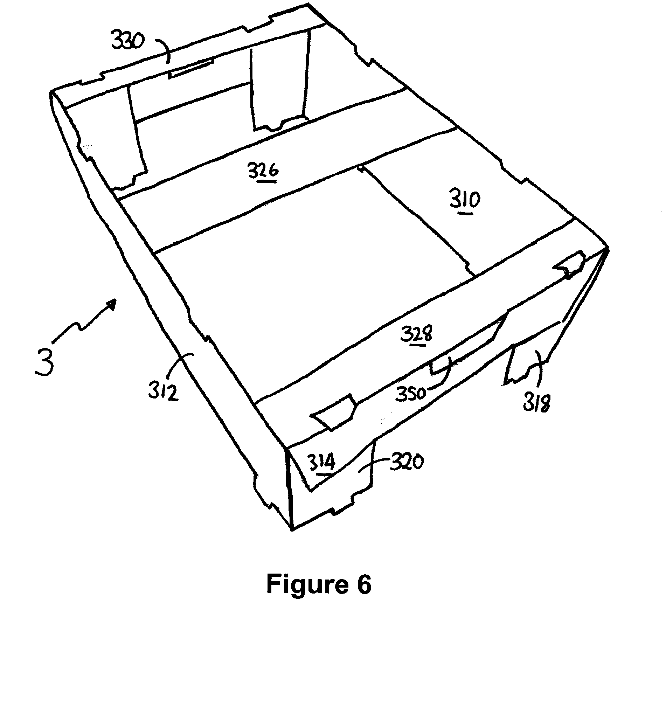

Figure 6 illustrates an alternative embodiment of the present invention in which like features have been assigned the same reference numerals as the previous embodiment but with the prefix "3" appended. It can be seen that the support panels 326, 328 and 330 have been manufactured to have straight edges rather than the wave like shaped nature of panels 126, 128, 130 shown in the embodiment of Figure 4.

The support panels 126, 128, 130 of the embodiment shown in Figure 4 have recessed edges located to be substantially in registry with the corners of the base panel 132a, 132b, 132c, 132d of the primary carton 1, which primary carton 1 comprises detachable panel 132a, 132b, 132c, 132d and which detachable panels are substantially "I" shaped.

It will be appreciated by those skilled in the art that detachable panels (not shown) for use with the embodiment of Figure 6 may be shaped so as to complement the support panels 326, 328, 330 and therefore need not take the "I" shaped form of the embodiment of Figure 4.

Furthermore, it will be appreciated by those skilled in the art that the base panel of the embodiment shown in Figures 2 and 5 when viewed in the manner shown in Figure 6 will be substantially similar to that shown in Figure 6, except for the support panels 126, 128, 130 which will be curved or wave like in shape.

It will be appreciated by those skilled in the art that alternative configurations could be employed for example each separate group need not be limited to having a double tier or each tier to having a two by three array of articles A. In the preferred embodiment each array of articles is frangibly connected to at least one other article A in the array however this need not be so and the articles A may not be coupled to one another.

Furthermore the packaging system 4 need not result in a group of four groups of cartons in a two by two array as shown in Figure 5 but may be any configuration desired for example a three by one array. Accordingly detachable panels 132a will be sized, shaped and configured to accommodate the size shape and configuration of the primary carton 1. In another embodiment the cartons 1 accommodated by the secondary package 2 are sized and/or shaped differently to one another and detachable panels 132a, 132b, 132c, 132d are sized and shaped accordingly.

It will be further appreciated that one of the benefits of the present invention is that the amount of secondary packaging to be disposed of in store is reduced.

Any directional references used in the above description are incorporated for clarity only and are not intended to be limiting. It will therefore be recognised that as used herein, that terms such as "top", "base", "side ", "end", "inner", "outer", "upper", and "lower" with respect to the panels of the relative terms , and that the carton formed from the blank may be reoriented as necessary or as desired. Any reference to a hinged or foldable connection should not be construed as necessarily referring to a single fold line only: indeed, it is envisaged that a hinged or foldable connection can be formed from one or more of the following, a score line, a frangible line or a fold line, without departing from the scope of the present invention. It is specifically contemplated that the arrangement may be incorporated into other carton types such, as, for example, fully enclosed cartons.

## Claims

1. A packaging system comprising a plurality of first carton blanks each for forming a first package about a group of articles and a second carton blank, having removable portions, for forming a second carton for packaging a group of the first packages, wherein each of the first carton blanks, in combination with a respective one of the removable portions of said second carton blank form a first carton about a respective one of said groups of articles, wherein each of the removable portions has inside and outside opposed surfaces, the inside surface being in contact at least in part with a respective one of the groups of articles, wherein the second carton blank comprises at least one engaging aperture, wherein at least one part of the each of the first carton blanks is inserted through the at least one engaging aperture and is secured to the outside surface of the respective one of the removable portions, and wherein the removable portions of said second carton blank are detachable therefrom such that each of said first cartons are individually separable from the second carton.

2. The packaging system of claim 1, wherein the each of the first carton blanks comprises a first panel, a second panel, a third panel and a pair of securing panels, wherein said first panel is hinged at opposing side edges thereof to said second and third panels respectively, and wherein each of the second and third panels is hinged to a respective one of the securing panels, said securing panels of the each of the first carton blanks together providing the at least one part of the each of the first carton blanks and being secured to the outside surface of the respective one of the removable portions of the second carton blank.

3. The packaging system of claim 1, wherein the each of the first carton blanks together with the respective one of the removable portions forms a tubular structure about the respective one of the groups of articles.

4. The packaging system of claim 3, wherein the second carton comprises side walls wherein said side walls at least partially close at least one end of each of the tubular structures.

5. The packaging system of claim 1, wherein the second carton blank comprises a main panel, the main panel including the removable portions and the at least one engaging aperture.

6. The packaging system of claim 5, wherein the second carton comprises tabs for being received by tab receiving recesses of another like second carton such that the packaging system may be stacked with another like packaging system whereby said packaging system and said another package system interlock with one another.

7. The packaging system according to claim 6, wherein said tab receiving recesses are formed by apertures struck from the second carton.

8. The packaging system of claim 6 wherein the at least one engaging aperture also forms the tab receiving recesses.

9. A packaging apparatus comprising a plurality of primary cartons each for packaging one or more articles therein and a secondary carton having removable portions, wherein said primary cartons are retained within said secondary carton wherein at least a portion of each of said primary cartons is provided by a respective one of the removable portions of said secondary carton, wherein each of the removable portions has inside and outside opposed surfaces, the inside surface being disposed to be in contact at least in part with one or more articles, wherein the secondary carton comprises at least one engaging aperture, wherein at least one part of the each of the primary cartons is inserted through the at least one engaging aperture and is secured to the outside surface of the respective one of the removable portions.

10. The packaging system of claim 5, wherein said removable portions are defined in part by said at least one engaging aperture and are coupled to the remainder of the main panel of the second carton blank by frangible connections such that each of the first cartons is removable from the second carton by breaking at least one of the frangible connections.

11. The packaging system of claim 2, wherein each of said removable portions couples between the second and third panels of a respective one of the first carton blanks and forms a fourth panel of a respective one of the first carton in combination with said securing panels of the respective one of the carton blanks.
